# EUROPÄISCHE PATENTANMELDUNG

(11) **EP 2 662 170 A1**
(43) Veröffentlichungstag der Anmeldung: **13.11.2013**
(21) Anmeldenummer: 13002453.2
(22) Anmeldetag: 08.05.2013
(51) Int. Cl.: B23B 51/10

(54) **Werkzeug, insbesondere zum Rückwärtsfasen und/oder Plansenken**

(30) Priorität: 11.05.2012 DE 102012009542
(71) Anmelder: Hermann Bilz GmbH & Co. KG, 73730 Esslingen (DE)
(72) Erfinder: Reichardt, Marina, 73249 Wernau (DE); Leitner, Frank, 73669 Lichtenwald (DE)
(74) Vertreter: Kohl, Karl-Heinz

(57) **Zusammenfassung**

Das Werkzeug hat einen Schneideinsatz (3), der an einem Arbeitsteil (2) frei drehbar gelagert ist und dessen Schneide aus einer Ruhestellung in eine Arbeitsstellung und umgekehrt verstellbar ist. Die Schneide wird durch Drehrichtungsänderung des Werkzeuges zwischen den beiden Stellungen verstellt. Der Arbeitsteil (2) hat eine schräg zu seiner Achse (7) liegende Stirnseite (5), an der der Schneideinsatz (3) mit seiner Unterseite (6) flächig anliegt. Der Schneideinsatz (3) bleibt bei Drehrichtungsänderung des Werkzeuges infolge Massenträgheit relativ zum Arbeitsteil (2) des Werkzeuges stehen. Die Drehachse des Schneideinsatzes (3) liegt unter einem spitzen Winkel zur Drehachse (7) des Werkzeuges.

## Beschreibung

Die Erfindung betrifft ein Werkzeug nach dem Oberbegriff des Anspruches 1.

Mit Werkzeugen in Form von Faswerkzeugen können die Enden von Bohrungen angefast bzw. entgratet werden. Damit das Faswerkzeug die Bohrung durchfahren kann, wird die Schneide in eine Ruhestellung verstellt, so dass sie nicht radial über das Faswerkzeug vorsteht. Sobald sich die Schneide außerhalb der Bohrung befindet, wird sie in die Arbeitsstellung verstellt, so dass bei einem Rückwärtsfahren des Faswerkzeuges das entsprechende Bohrungsende bearbeitet werden kann.

Um die Schneide zwischen der Ruhe- und der Arbeitsstellung verstellen zu können, sind Faswerkzeuge bekannt, die zur Verstellung der Schneideinsätze aufwändige Verstelleinrichtungen aufweisen. Sie erschweren nicht nur die Handhabung des Faswerkzeuges, sondern verteuern auch deren Herstellung. Zudem sind solche Faswerkzeuge empfindlich im Einsatz.

Es sind auch Werkzeuge bekannt (DE 36 04 770 C2, DE 90 16 440 U1, US 7 172 374 B2), bei denen der Schneideinsatz um eine parallel zur Drehachse des Werkzeuges liegende Achse zwischen der Ruhestellung und der Arbeitsstellung schwenkbar ist. Zumindest in der Ruhestellung liegt der Schneideinsatz in einer Tasche bzw. Vertiefung. In sie können beim Bearbeiten der Werkstücke Späne und dgl. geraten, die das Zurückschwenken des Schneideinsatzes in die Ruhestellung erschweren oder sogar verhindern.

Der Erfindung liegt die Aufgabe zugrunde, das gattungsgemäße Werkzeug so auszubilden, dass sein Schneideinsatz bei einfacher und kostengünstiger Herstellung zuverlässig zwischen der Ruhe- und der Arbeitsstellung verstellt werden kann.

Diese Aufgabe wird beim gattungsgemäßen Werkzeug erfindungsgemäß mit den kennzeichnenden Merkmalen des Anspruches 1 gelöst.

Beim erfindungsgemäßen Werkzeug ist keine Verstelleinrichtung für die Schneide erforderlich. Vielmehr wird allein durch eine Drehrichtungsumkehr des Werkzeuges die Schneide zwischen der Ruhe- und der Arbeitsstellung verstellt. Dadurch zeichnet sich das erfindungsgemäße Werkzeug durch einen konstruktiv sehr einfachen Aufbau aus. Das Werkzeug lässt sich kostengünstig herstellen und ist infolge seiner Einfachheit problemlos im Einsatz. Der Schneideinsatz, der die Schneide aufweist, ist frei drehbar an einem Arbeitsteil des Werkzeuges gelagert. Durch Drehen des Schneideinsatzes gelangt die Schneide in die Ruhe- bzw. Arbeitsstellung. Der Arbeitsteil des Werkzeuges ist mit einer schräg zu seiner Drehachse liegenden Stirnseite versehen, an der der Schneideinsatz mit seiner Unterseite flächig anliegt. Je geringer diese Neigung ist, desto einfacher und zuverlässiger lässt sich der Schneideinsatz durch eine Drehrichtungsänderung des Werkzeuges in die Ruhe- sowie in die Arbeitsstellung verstellen. Der Schneideinsatz bleibt bei Drehrichtungsänderung des Werkzeuges infolge Massenträgheit relativ zum Arbeitsteil des Werkzeuges stehen. Die Masse des Schneideinsatzes wird somit dazu ausgenutzt, allein durch die Drehänderung des Werkzeuges die Verstellung des Schneideinsatzes durchzuführen. Zwischen die Stirnseite des Arbeitsteiles und die Unterseite des Schneideinsatzes können, da sie flächig aneinander liegen, keine Werkstückspäne gelangen. Dadurch ist sichergestellt, dass der Schneideinsatz zuverlässig in seine Ruhestellung verstellt werden kann.

Eine bevorzugte Ausbildung ergibt sich, wenn die Ruhe- und die Arbeitsstellung der Schneide durch Anschläge festgelegt sind. Je nach Drehrichtung des Werkzeuges wird der Schneideinsatz am entsprechenden Anschlag abgestützt. Infolge der Drehung des Werkzeuges liegt der Schneideinsatz unter Krafteinwirkung am Anschlag an, so dass der Schneideinsatz nicht unbeabsichtigt verstellt wird. Das Werkzeug wird während seines Einsatzes mit einer solchen Geschwindigkeit drehbar angetrieben, dass der Schneideinsatz gegen den jeweiligen Anschlag gedrückt wird.

Um den Schneideinsatz in der Ruhe- und in der Arbeitsstellung zuverlässig zu halten, ist der Schneideinsatz mit wenigstens einem Anschlagteil versehen. Er sorgt dafür, dass der Schneideinsatz in der jeweiligen Stellung zuverlässig gehalten wird.

Bevorzugt ist der Schneideinsatz auf einem Halterungsteil drehbar gelagert, mit dem der Schneideinsatz am Werkzeug gehalten wird.

Der Arbeitsteil oder der Schneideinsatz oder das Halterungsteil können mit Gegenanschlägen für den Anschlagteil versehen sein.

Das Halterungsteil ist vorteilhaft mit zwei Anschlagflächen als Gegenanschläge versehen, an denen der Anschlagteil des Schneideinsatzes je nach Drehrichtung des Werkzeuges anliegt. Die Anschlagflächen stellen sicher, dass der Schneideinsatz in der Ruhe- sowie in der Arbeitsstellung positioniert gehalten wird.

Die Anschlagflächen sind bei einer bevorzugten Ausbildung an einem vorstehenden Anschlag des Halterungsteiles vorgesehen.

Der Anschlagteil des Schneideinsatzes ist so vorgesehen, dass er je nach Drehrichtung des Werkzeuges an der einen oder der anderen Anschlagfläche zur Anlage kommt. Die Schneide gelangt dadurch zuverlässig in die Ruhe- bzw. in die Arbeitsstellung.

Der Schneideinsatz weist vorteilhaft eine Mantelfläche auf, deren Erzeugende parallel zur Drehachse des Schneideinsatzes liegt. Dadurch ist es möglich, dass durch den Drehvorgang des Schneideinsatzes die Schneide in der Ruhestellung in eine Position gelangt, in der sie nicht über das Werkzeug bzw. seinen Arbeitsteil vorsteht. Es ist dadurch möglich, das Werkzeug in drehbar angetriebenem Zustand durch eine Bohrung eines Werkstückes zu fahren. Aufgrund der Umfangskräfte bleibt der Schneideinsatz in Anlage am entsprechenden Anschlag.

Hierbei ist es vorteilhaft, wenn die Drehachse des Schneideinsatzes unter einem spitzen Winkel zur Drehachse des Werkzeuges liegt. Dann kann durch den Drehvorgang des Schneideinsatzes in einfacher Weise erreicht werden, dass die Schneide in die Ruhestellung sowie in die Arbeitsstellung gelangt.

Die Drehachse des Schneideinsatzes fluchtet vorteilhaft mit der Längsachse des Halterungsteiles. Dadurch ist eine einfache Montage des Werkzeuges möglich.

Das Werkzeug ist in vorteilhafter Weise so ausgebildet, dass der Anschlagteil unter Wirkung der Umfangskraft bei drehend angetriebenem Werkzeug an der jeweiligen Anschlagfläche anliegt. Der Anschlagteil wird unter der Umfangskraft gegen die entsprechende Anschlagfläche gedrückt, so dass nicht die Gefahr besteht, dass der Schneideinsatz und damit die Schneide unbeabsichtigt aus der einen in die andere Stellung verstellt wird.

Eine besonders einfache konstruktive Gestaltung ergibt sich, wenn der Anschlag des Halterungsteiles den Schneideinsatz axial sichert. Der Anschlag steht vorteilhaft quer vom Halterungsteil vor und übergreift den Schneideinsatz an seiner Stirnseite.

Das Halterungsteil wird vorteilhaft durch ein Sicherungselement, vorzugsweise einen Sicherungsstift, axial und gegen Verdrehen gesichert, das im Arbeitsteil des Werkzeuges gehalten ist und in eine Vertiefung am Umfang des Halterungsteils eingreift.

Der Schneideinsatz kann vorteilhaft mit der Schneide einstückig ausgebildet sein und beispielsweise aus HSS-Material oder aus Hartmetall bestehen.

Der Schneideinsatz kann aber auch einen Tragkörper aufweisen, an dem die Schneide befestigt ist. Der Tragkörper kann aus jedem geeigneten Material bestehen. Die Schneide besteht vorteilhaft aus HSS-Material oder aus Hartmetall. Die Schneide kann in bevorzugter Weise eine Wendeschneidplatte sein. Die Befestigung der Schneide am Tragkörper kann durch Auflöten, Anschrauben, Aufkleben und dergleichen erfolgen.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in Seitenansicht sowie in Stirnansicht eine erste Ausführungsform eines erfindungsgemäßen Werkzeuges, das im Linkslauf arbeitet und dessen Schneide sich in Arbeitsstellung befindet,
- Fig. 2: in einer Darstellung entsprechend Fig. 1 das erfindungsgemäße Werkzeug im Rechtslauf, dessen Schneide sich in Ruhestellung befindet,
- Fig. 3: einen Längsschnitt durch das erfindungsgemäße Werkzeug,
- Fig. 4: die Einzelheit IV in Fig. 3 in vergrößerter Darstellung,
- Fig. 5 und Fig. 6: jeweils in vergrößerter Darstellung verschiedene Ansichten eines Schneideinsatzes des erfindungsgemäßen Werkzeuges,
- Fig. 7: in perspektivischer Darstellung ein Halterungsteil für den Schneideinsatz des erfindungsgemäßen Werkzeuges,
- Fig. 8: in einer Darstellung entsprechend Fig. 4 eine zweite Ausführungsform eines erfindungsgemäßen Werkzeuges,
- Fig. 9: eine Ansicht der zweiten Ausführungsform des erfindungsgemäßen Werkzeuges.

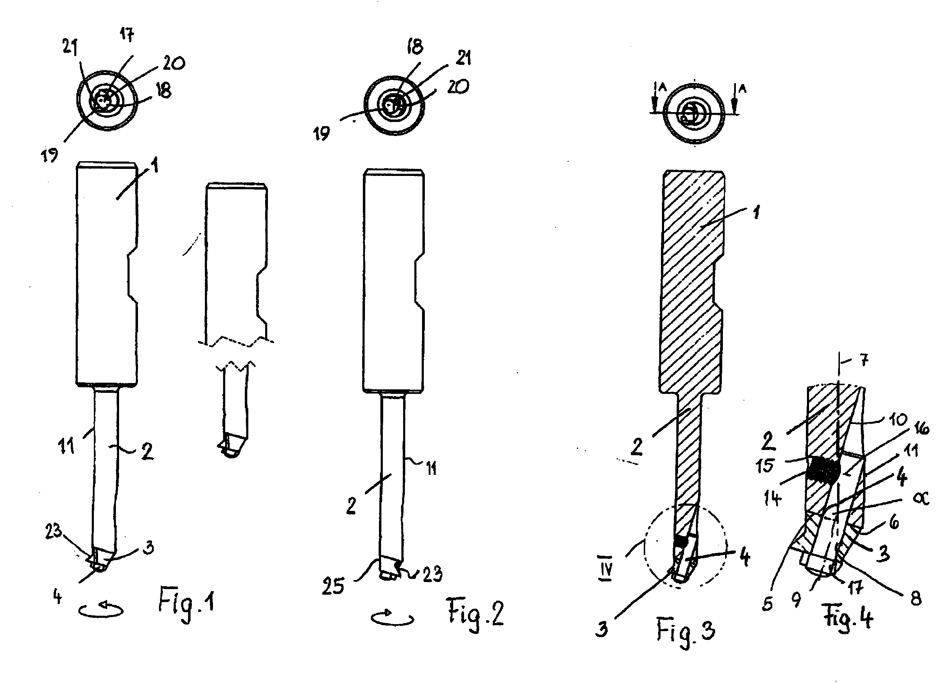

Im Folgenden wird ein Werkzeug anhand der Fig. 1 bis 9 beschrieben, das ein Faswerkzeug, insbesondere ein Rückwärtsfaswerkzeug ist. Dieses Ausführungsbeispiel ist allerdings nicht als Beschränkung zu verstehen. Das Werkzeug kann beispielsweise auch ein Werkzeug zum Plansenken sein. Es kommen alle Werkzeuge in Betracht, bei denen eine Schneide zwischen einer Ruhe- und einer Arbeitsstellung verstellbar ist. Dadurch kann die Schneide durch eine Bohrung eines Werkstückes bewegt werden, ohne dass die Schneide des Schneideinsatzes mit der Bohrungswand in Berührung kommt. Das Faswerkzeug wird so weit durch die Bohrung bewegt, dass sich der Schneideinsatz hinter der Bohrung befindet. Das Faswerkzeug wird nunmehr so drehbar angetrieben, dass der Schneideinsatz aus der Ruhestellung in eine Arbeitsstellung gelangt, in der mit der Schneide des Schneideinsatzes durch axiales Zurückfahren des Faswerkzeuges das entsprechende Bohrungsende angefast und/oder entgratet werden kann.

Das Faswerkzeug hat einen Schaft 1, mit dem es in eine Spindel oder eine Werkzeugaufnahme in bekannter Weise eingespannt werden kann. Vom Schaft 1 steht ein schlanker schaftförmiger Arbeitsteil 2 ab. Am freien Ende des Arbeitsteiles 2 ist ein Schneideinsatz 3 begrenzt drehbar gelagert. Der Schneideinsatz 3 wird durch ein Halterungsteil 4 am Arbeitsteil 2 gehalten. Der Arbeitsteil 2 hat eine ebene elliptische Stirnseite 5 (Fig. 4), an der der Schneideinsatz 3 mit einer gleich großen ebenen elliptischen Unterseite 6 flächig anliegt. Die Stirnseite 5 und die Unterseite 6 liegen in einem spitzen Winkel α zur Längsachse 7 des Arbeitsteils 2. Dieser Winkel α beträgt beispielsweise etwa 10° bis 20°. Je geringer die Neigung der Stirnseite 5, bezogen auf eine Lage senkrecht zur Längsachse 7, ist, desto leichter lässt sich der Schneideinsatz 3 im Einsatz um seine Achse drehen.

Der Schneideinsatz 3 hat eine Durchgangsöffnung 8, deren Achse 9 senkrecht zur Unterseite 6 des Schneideinsatzes 3 verläuft. Durch die Durchgangsöffnung 8 wird das bolzenförmige Halterungsteil 4 gesteckt. In die Stirnseite 5 des Arbeitsteiles 2 mündet eine Öffnung 10, in die das Halterungsteil 4 ragt und deren Längsachse fluchtend zur Achse 9 der Durchgangsöffnung 8 liegt. Die Öffnung 10 erstreckt sich bis in die Mantelfläche 11 des Arbeitsteiles 2. Die Durchgangsöffnung 8 und die Öffnung 10 haben den gleichen Durchmesser.

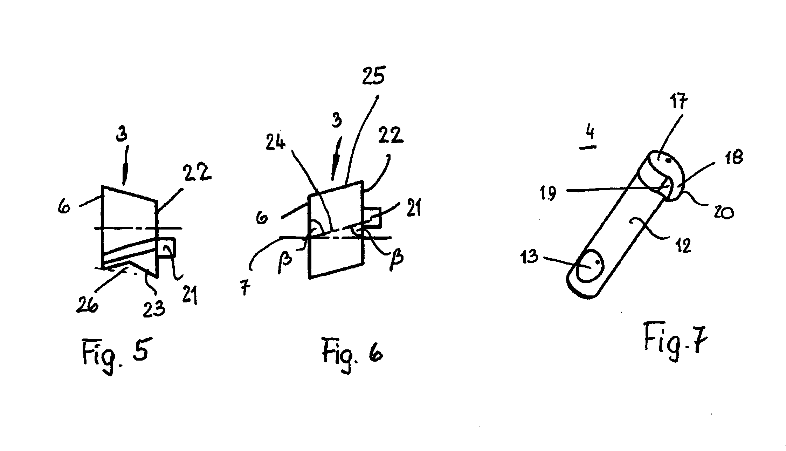

Das Halterungsteil 4 hat in seiner zylindrischen Mantelfläche 12 (Fig. 7) eine Vertiefung 13, in die ein Sicherungsstift 14 eingreift (Fig. 4), der als Stiftschraube ausgebildet ist. Sie wird in eine Gewindebohrung 15 des Arbeitsteiles 2 geschraubt. Die Achse der Gewindebohrung 15 liegt senkrecht zur Achse 9 der Durchgangsöffnung 8. In der Einbaulage gemäß Fig. 4 liegt der Sicherungsstift 14 versenkt im Arbeitsteil 2, so dass er beim Arbeiten mit dem Faswerkzeug nicht stört. Das Halterungsteil 4 ist nur so lang, dass es nicht über die zylindrische Mantelfläche 11 des Arbeitsteiles 2 übersteht.

Das Halterungsteil 4 hat einen Kopf 17, der einen radial vorstehenden Anschlag 18 aufweist, dessen beide einander gegenüberliegende Seitenflächen Anschlagflächen 19, 20 für einen Anschlagteil 21 des Schneideinsatzes 3 bilden. Der Anschlag 18 des Halterungsteiles 4 kann, wie Fig. 7 zeigt, als schmaler radialer Vorsprung ausgebildet sein. Der Anschlag 18 kann aber auch, wie beispielsweise aus den Fig. 1 und 2 hervorgeht, ein radialer Vorsprung sein, der sich über einen Winkelbereich von beispielsweise etwa 90° erstreckt. Die Anschlagflächen 19, 20 verlaufen in diesem Falle beispielsweise unter einem rechten Winkel zueinander, in Achsrichtung des Faswerkzeuges gesehen. Der Anschlag 18 dient auch als Axialsicherung des Schneideinsatzes 3.

Der Anschlagteil 21 des Schneideinsatzes 3 ist beispielhaft ein über die Stirnseite 22 des Schneideinsatzes 3 vorstehender Zapfen, der je nach Drehrichtung das Faworkzeug an einer der Anschlagflächen 10, 20 anliegt. Die Stirnseite 22 des Schneideinsatzes 3 ist eben und liegt parallel zur Unterseite 6 des Schneideinsatzes (Fig. 5 und 6).

Der Schneideinsatz 3 sitzt frei drehbar auf dem Halterungsteil 4. Je nach Drehrichtung des Faswerkzeuges und damit auch des Halterungsteils 4 gelangt der Anschlagteil 21 des Schneideinsatzes 3 zur Anlage an der Anschlagfläche 19 oder 20. Gemäß Fig. 1 befindet sich das Faswerkzeug im Linkslauf. Dabei liegt der Anschlagteil 21 des Schneideinsatzes 3 an der Anschlagfläche 19 an. In dieser Stellung steht eine Schneide 23 des Schneideinsatzes 3, in Achsrichtung des Arbeitsteiles 2 gesehen, über dessen Mantelfläche 11 vor (Fig. 1), so dass mit der Schneide 23 beim Rückwärtsfasen der Rand der Bohrung im Werkstück angefast und/oder entgratet werden kann.

Wird das Faswerkzeug im Rechtslauf drehbar angetrieben (Fig. 2), dann kommt der Anschlagteil 21 des Schneideinsatzes 3 in Berührung mit der Anschlagfläche 20 des Halterungsteils 4. In dieser Stellung steht die Schneide 23 nicht radial über die Mantelfläche 11 des Arbeitsteiles 2 vor, so dass in dieser Stellung der Arbeitsteil 2 durch die anzufasende Bohrung im Werkstück gefahren werden kann, ohne dass die Schneide 23 in Kontakt mit der Bohrungswand kommt.

Da der Schneideinsatz 3 frei drehbar auf dem Halterungsteil 4 sitzt, bleibt der Schneideinsatz 3 infolge seiner Massenträgheit zunächst stehen, wenn das Faswerkzeug drehbar angetrieben wird. Der Arbeitsteil 2 dreht somit relativ zum Schneideinsatz, bis die entsprechende Anschlagfläche 19 oder 20 des Halterungsteils 4 am Anschlagteil 21 des Schneideinsatzes 3 zur Anlage kommt. Dann wird der Schneideinsatz in der entsprechenden Drehrichtung mitgenommen.

Wie aus den Fig. 5 und 6 hervorgeht, hat der Schneideinsatz 3 eine Drehachse 24, die zentrisch zur Unterseite 6 liegt, mit der Längsachse 9 des Halterungsteils 4 zusammenfällt und mit der Drehachse 7 des Faswerkzeuges einen stumpfen Winkel einschließt. Die Drehachse 24 liegt unter einem spitzen Winkel β zur Unterseite 6 sowie zur Stirnseite 22 des Schneideinsatzes 3.

Eine Mantelfläche 25 des Schneideinsatzes 3 hat eine Erzeugende, die parallel zur Drehachse 24 liegt (Fig. 6). Die Unterseite 6 des Schneideinsatzes 3 hat dadurch kreisförmigen Umriss. Im Bereich der Schneide 23 ist in der Mantelfläche 25 eine Vertiefung 26 gebildet (Fig. 5), die V-förmigen Umriss hat.

Aufgrund der beschriebenen Ausbildung steht die Schneide 23 radial über die Mantelfläche 11 des Arbeitsteiles 2 über, wenn der Anschlagteil 21 an der Anschlagfläche 19 des Halterungsteiles 4 anliegt und das Faswerkzeug links drehend angetrieben wird (Fig. 1). Wird das Faswerkzeug gemäß Fig. 2 rechtsdrehend angetrieben, dann nimmt die Anschlagfläche 20 des Halterungsteiles 4 den Schneideinsatz 3 über den Anschlagteil 21 mit. Der Schneideinsatz 3 wird hierbei so gedreht, dass seine Mantelfläche 25 mit der Mantelfläche 11 des Arbeitsteiles 2 fluchtend liegt. Dies hat zur Folge, dass die Schneide 23 nicht radial über die Mantelfläche 11 des Arbeitsteiles 2 vorsteht.

Zur Verstellung des Schneideinsatzes 3 in die Arbeitsstellung gemäß Fig. 1 und in die Ruhestellung gemäß Fig. 2 sind keine aufwändigen Verstelleinrichtungen erforderlich. Die jeweiligen Stellungen des Schneideinsatzes 3 werden allein durch die Drehrichtungsumkehr des Faswerkzeuges erreicht. Der Schneideinsatz 3 bleibt bei der jeweiligen Drehrichtungsumkehr des Faswerkzeuges relativ zum Arbeitsteil 2 zunächst stehen, bis er über den Anschlagteil 21 in der beschriebenen Weise in der jeweiligen Drehrichtung des Faswerkzeuges mitgenommen wird. Aufgrund der auftretenden Umfangskraft bleibt der Anschlagteil 21 stets in Anlage an der Anschlagfläche 19 bzw. 20, so dass ein zuverlässiges Arbeiten mit dem Faswerkzeug möglich ist.

Um einen Rückwärtsfasvorgang auszuführen, wird das Faswerkzeug zunächst so drehend angetrieben, dass der Schneideinsatz 3 in seine Ruhestellung (Fig. 2) gelangt. Im Ausführungsbeispiel wird das Faswerkzeug rechtsdrehend angetrieben. Die Schneide 23 ragt nicht über den Arbeitsteil 2 vor, in dessen Achsrichtung gesehen. Das drehend angetriebene Faswerkzeug wird durch die Bohrung im Werkstück so weit bewegt, bis der Arbeitsteil 2 mit dem Schneideinsatz 3 aus der Bohrung herausgetreten ist. Nunmehr wird das Faswerkzeug in der anderen Richtung drehbar angetrieben, im Ausführungsbeispiel im Linkslauf gemäß Fig. 1. Aufgrund der Trägheit bleibt der Schneideinsatz 3 relativ zum Arbeitsteil 2 stehen, so dass eine Relativdrehung zwischen Arbeitsteil 2 und Schneideinsatz 3 stattfindet. Die Schneide 23 gelangt damit in die Arbeitsstellung gemäß Fig. 1, in der sie radial über die Mantelfläche 11 des Arbeitsteiles 2 vorsteht, in Achsrichtung des Faswerkzeuges gesehen. Der Anschlagteil 21 des Schneideinsatzes 3 stützt sich an der Anschlagfläche 19 des Halterungsteiles 4 ab. In dieser Stellung wird nunmehr das Faswerkzeug zurückgezogen, wodurch die Schneide 23 in Kontakt mit dem Bohrungsende gelangt und dieses anfast und/oder entgratet. Sobald der Arbeitsvorgang abgeschlossen ist, wird die Drehrichtung des Faswerkzeuges erneut umgekehrt, wodurch aufgrund der Relativdrehung zwischen dem Arbeitsteil 2 und dem Schneideinsatz 3 die Schneide 23 in die Stellung gemäß Fig. 2 gelangt. Das Faswerkzeug kann nunmehr aus der Bohrung zurückgezogen werden.

Das Zurückschwenken des Schneideinsatzes 3 in die Ruhestellung wird dadurch begünstigt, dass die Schneide 23 zunächst noch Kontakt mit der Bohrungswand hat. Wird die Drehrichtung des Faswerkzeuges umgekehrt, erhält der Schneideinsatz 3 dadurch einen Bewegungsimpuls in Richtung auf seine Ruhestellung.

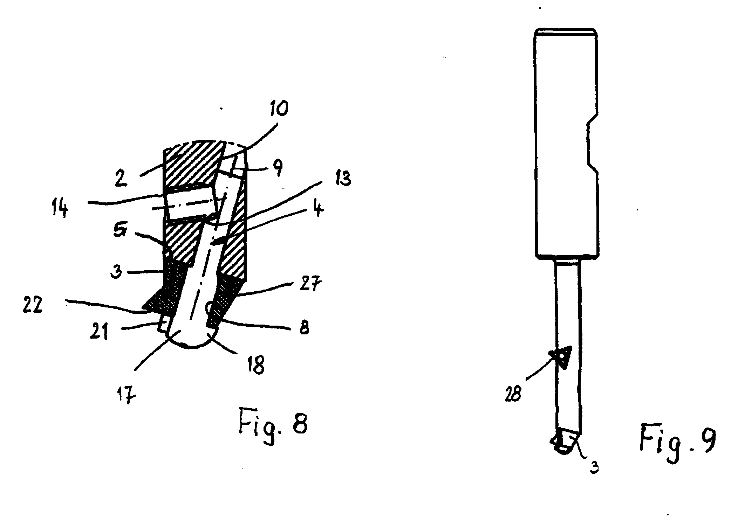

Fig. 8 zeigt eine zweite Ausführungsform des Halterungsteils 4. Es hat den Kopf 17 mit dem Anschlag 18, an dessen Seitenflächen der Schneideinsatz 3 mit seinem Anschlagteil 21 in der beschriebenen Weise zur Anlage kommt. Im Unterschied zur vorigen Ausführungsform hat das Halterungsteil 4 im Bereich des Schneideinsatzes 3 einen größeren Durchmesser als in dem im Arbeitsteil 2 befindlichen Abschnitt. Dadurch wird eine umlaufende Ringschulter 27 gebildet, die in der Einbaulage an der Stirnseite 5 des Halterungsteils 4 anliegt. Die Durchgangsöffnung 8 des Schneideinsatzes 3 hat dementsprechend größeren Durchmesser als die Öffnung 10 im Arbeitsteil 2. Wie bei der vorigen Ausführungsform wird der Schneideinsatz 3 durch den Anschlag 18 axial gesichert, der mit seiner Unterseite an der Stirnseite 22 des Schneideinsatzes 3 anliegt.

Der Sicherungsstift 14 liegt unter einem spitzen Winkel zur Längsachse 9 des Halterungsteiles 4 und greift in die Vertiefung 13 des Halterungsteils 4 ein.

Im Übrigen ist das Faswerkzeug nach Fig. 8 gleich ausgebildet wie bei der vorigen Ausführungsform.

Fig. 9 zeigt ein Faswerkzeug, das zusätzlich zum Schneideinsatz 3 mit einer Schneidplatte 28, die bevorzugt eine Wendeschneidplatte ist, ausgestattet ist. Mit ihr ist es möglich, am Werkstück eine zusätzliche Bearbeitungsoperation durchzuführen. So kann eine Bohrung in einem Werkstück mit einem solchen Faswerkzeug an beiden Enden angefast und/oder entgratet werden. Mit der Schneidplatte 28 kann somit beispielsweise auch ein Vorwärtsentgraten durchgeführt werden.

Der Schneideinsatz 3 kann bei den verschiedenen Ausführungsbeispielen unterschiedlich gestaltet sein. Je nach Winkel der Schneide 23 kann die Fase am Werkstück unterschiedlich gestaltet sein. Der Schneideinsatz 3 kann so ausgebildet sein, dass mit ihm an einem Werkstück auch ein Planvorgang durchgeführt werden kann. Wenn die Schneide 23 mit einer Kontur versehen ist, können am Werkstück auch entsprechende Konturen angebracht werden.

Im dargestellten Ausführungsbeispiel ist der Schneideinsatz 3 einstückig ausgebildet. Er kann aus einem HSS-Material oder auch aus Hartmetall bestehen.

Der Schneideinsatz 3 kann aber auch einen Tragkörper aufweisen, an dem wenigstens eine Schneide befestigt ist. Der Tragkörper kann aus HSS-Material bestehen. Die Schneide, die vorteilhaft aus Hartmetall besteht, kann auf den Tragkörper aufgelötet, aufgeschraubt, aufgeklebt und dergleichen sein. Die Schneide ist in diesem Falle vorteilhaft eine Wendeschneidplatte, wodurch der Schneideinsatz lange im Einsatz sein kann.

Im beschriebenen und dargestellten Ausführungsbeispiel ist der Anschlag 18 am Halterungsteil 4 und der Anschlagteil 21 am Schneideinsatz 3 vorgesehen. Die Anschlagwirkung kann aber auch durch eine andere Gestaltung erreicht werden. So kann beispielsweise in der Stirnseite 4 des Arbeitsteiles 2 eine teilringförmige Vertiefung vorgesehen sein, in die ein von der Unterseite 6 des Schneideinsatzes 3 abstehender Anschlagteil eingreift. Die beiden Anschläge für den Anschlagteil sind in diesem Falle die Enden der teilringförmigen Nut.

Es ist auch möglich, diese teilringförmige Nut in der Unterseite 6 des Schneideinsatzes 3 vorzusehen, in die ein von der Stirnseite 4 des Arbeitsteiles 2 abstehender Halterungsteil eingreift. Die Enden der teilringförmigen Nut im Schneideinsatz 3 bilden dann die Anschlagflächen 19, 20.

In den beiden zuletzt beschriebenen Fällen dient der Kopf 17 des Halterungsteiles 4 nur zur axialen Sicherung des Schneideinsatzes 3 auf dem Arbeitsteil 2.

Mit dem beschriebenen Werkzeug ist es auch möglich, beispielsweise durch Bohrungen in einem Werkstück hindurchzufahren und Bearbeitungen an einem darunter befindlichen verdeckten Werkstück auszuführen. Dies können Rückwärts-, aber auch Vorwärtsbearbeitungen sein.

Der Schneideinsatz 3 ist bei den beschriebenen Ausführungsformen ein massives Bauteil, das auch größere Kräfte aufnehmen kann. Da der Schneideinsatz 3 an das freie Ende des Arbeitsteiles 2 anschließt und in der Ruhestellung nicht in einer Tasche oder einer Vertiefung des Arbeitsteiles 2 liegt, tritt nicht das Problem auf, dass beim Bearbeiten der Werkstücke anfallende Späne und dgl. das Zurückdrehen des Schneideinsatzes 3 in die Ruhestellung behindern könnten. Zwischen die aufeinander liegenden Seiten 5 und 6 des Arbeitsteiles 2 und des Schneideinsatzes 3 können keine Werkstückspäne und dgl. geraten.

## Patentansprüche

1. Werkzeug, insbesondere zum Rückwärtsfasen und/oder Plansenken, mit wenigstens einem Schneideinsatz (3), der an einem Arbeitsteil (2) frei drehbar gelagert ist und dessen Schneide (23) aus einer Ruhestellung in eine Arbeitsstellung und umgekehrt verstellbar ist, wobei die Schneide (23) durch Drehrichtungsänderung des Werkzeuges zwischen beiden Stellungen verstellbar ist,
**dadurch gekennzeichnet, dass** der Arbeitsteil (2) eine schräg zu seiner Achse (7) liegende Stirnseite (5) aufweist, an der der Schneideinsatz (3) mit seiner Unterseite (6) flächig anliegt, der bei Drehrichtungsänderung des Werkzeuges infolge Massenträgheit relativ zum Arbeitsteil (2) des Werkzeuges stehen bleibt, und dass die Drehachse (24) des Schneideinsatzes (3) unter einem spitzen Winkel (α) zur Drehachse (7) des Werkzeuges liegt.

2. Werkzeug nach Anspruch 1,
**dadurch gekennzeichnet, dass** die Ruhe- und die Arbeitsstellung der Schneide (23) durch Anschläge (19, 20, 21) festgelegt sind.

3. Werkzeug nach Anspruch 2,
**dadurch gekennzeichnet, dass** der Schneideinsatz (3) oder der Arbeitsteil (2) mit wenigstens einem Anschlagteil (21) versehen ist.

4. Werkzeug nach einem der Ansprüche 1 bis 3,
**dadurch gekennzeichnet, dass** der Schneideinsatz (3) auf einem Halterungsteil (4) drehbar sitzt.

5. Werkzeug nach einem der Ansprüche 1 bis 4,
**dadurch gekennzeichnet, dass** der Arbeitsteil (2) oder der Schneideinsatz (3) oder das Halterungsteil (4) mit Gegenanschlägen (19, 20) für den Anschlagteil (21) versehen ist.

6. Werkzeug nach einem der Ansprüche 1 bis 5,
**dadurch gekennzeichnet, dass** das Halterungsteil (4) als Gegenanschläge zwei Anschlagflächen (19, 20) für den Anschlagteil (21) des Schneideinsatzes (3) aufweist.

7. Werkzeug nach einem der Ansprüche 1 bis 6,
**dadurch gekennzeichnet, dass** die Anschlagflächen (19, 20) an einem vorstehenden Anschlag (18) des Halterungsteiles (4) vorgesehen sind.

8. Werkzeug nach einem der Ansprüche 1 bis 7,
**dadurch gekennzeichnet, dass** der Anschlagteil (21) des Schneideinsatzes (3) je nach Drehrichtung des Werkzeuges an der einen oder der anderen Anschlagfläche (19, 20) anliegt.

9. Werkzeug nach einem der Ansprüche 1 bis 8,
**dadurch gekennzeichnet, dass** der Schneideinsatz (3) eine Mantelfläche (25) aufweist, deren Erzeugende parallel zur Drehachse (24) des Schneideinsatzes (3) liegt.

10. Werkzeug nach einem der Ansprüche 1 bis 9,
**dadurch gekennzeichnet, dass** die Drehachse (24) des Schneideinsatzes (3) mit der Längsachse (9) des Halterungsteiles (4) fluchtet.

11. Werkzeug nach einem der Ansprüche 1 bis 10,
**dadurch gekennzeichnet, dass** der Anschlagteil (21) unter Wirkung der Umfangskraft bei drehend angetriebenem Werkzeug an der jeweiligen Anschlagfläche (19, 20) anliegt.

12. Werkzeug nach einem der Ansprüche 1 bis 12,
**dadurch gekennzeichnet, dass** der Anschlag (18) des Halterungsteiles (4) den Schneideinsatz (3) axial sichert.

13. Werkzeug nach einem der Ansprüche 1 bis 12,
**dadurch gekennzeichnet, dass** das Halterungsteil (4) durch ein Sicherungselement (14), vorzugsweise einen Sicherungsstift, axial und gegen Verdrehen gesichert ist, das im Arbeitsteil (2) des Werkzeuges gehalten ist und in eine Vertiefung (13) am Umfang des Halterungsteiles (4) eingreift.

14. Werkzeug nach einem der Ansprüche 1 bis 13,
**dadurch gekennzeichnet, dass** der Schneideinsatz (3) mit der Schneide (23) einstückig ausgebildet ist.

15. Werkzeug nach einem der Ansprüche 1 bis 14,
**dadurch gekennzeichnet, dass** der Schneideinsatz (3) einen Tragkörper aufweist, an dem die Schneide (23) befestigt ist.

16. Werkzeug nach einem der Ansprüche 1 bis 15,
**dadurch gekennzeichnet, dass** die Stirnseite (5) des Arbeitsteiles (2) und die Unterseite (6) des Schneideinsatzes (3) etwa gleich groß und elliptisch sind, in Längsrichtung des Arbeitsteiles (2) gesehen.
